# EUROPÄISCHE PATENTSCHRIFT

(11) **EP 1 034 314 B1**
(45) Veröffentlichungstag und Bekanntmachung des Hinweises auf die Patenterteilung: **08.01.2003**
(21) Anmeldenummer: 98965686.3
(22) Anmeldetag: 21.11.1998
(51) Int. Cl.: C21D 9/30

(54) **VORRICHTUNG ZUM ELEKTROINDUKTIVEN HÄRTEN VON LAUFFLÄCHEN UND ÜBERGANGSRADIEN AN KURBELWELLEN**
DEVICE FOR ELECTRO-INDUCTIVE HARDENING OF BEARING SURFACES AND TRANSITION RADII IN CRANKSHAFTS
DISPOSITIF DE DURCISSEMENT ELECTRO-INDUCTIF DE SURFACES DE PORTEE ET DE RAYONS DE TRANSITION DE VILEBREQUINS

(30) Priorität: 26.11.1997 DE 19752237
(43) Veröffentlichungstag der Anmeldung: 13.09.2000
(73) Patentinhaber: Maschinenfabrik Alfing Kessler GmbH, 73433 Aalen-Wasseralfingen (DE)
(72) Erfinder: OTTENWÄLDER, Adalbert, D-74597 Stimpfach (DE); TRAUB, Harald, D-73431 Aalen (DE)
(74) Vertreter: Lorenz, Werner, Dr.-Ing.
(86) Internationale Anmeldenummer: EP9807503
(87) Internationale Veröffentlichungsnummer: WO99027143

(56) Entgegenhaltungen:
- DE-A- 4 001 887
- DE-C- 3 613 909
- DE-C- 3 617 468
- DE-C- 4 236 921
- DE-C- 19 530 430
- DE-U- 29 622 883

## Beschreibung

Die Erfindung betrifft eine Vorrichtung zum umlaufend gleichzeitig erfolgenden elektroinduktiven Härten von Laufflächen und Übergangsradien an Kurbelwellen mit unmittelbar nebeneinander und mit unterschiedlicher Winkellage in der Ebene senkrecht zu deren Drehachse direkt hintereinander angeordneten Hubzapfen nach der im Oberbegriff von Anspruch 1 näher definierten Art.

Eine Härtevorrichtung dieser Art ist aus der DE 296 22 883 U1 bekannt.

Im Vergleich zum allgemein bekannten elektroinduktiven Härten von sogenannten "Split-Pin-Kurbelwellen", welche unmittelbar nebeneinander und versetzt angeordnete Hubzapfen aufweisen wird bei der DE 296 22 883 U1 ein größerer Umschlingungswinkel erreicht.

Aus der DE 36 13 309 ist ein Verfahren und eine Vorrichtung zum induktiven Härten von Laufflächen und Übergangsradien an "Split-Pin-Kurbelwellen" bekannt, wobei die Laufflächen und Übergangsradien der direkt hintereinander angeordneten Hubzapfen umlaufend durch Induktoren, die senkrecht zur Drehachse der Kurbelwelle versetzt gegenüberliegend angeordnet sind, gleichzeitig gehärtet werden.

Diese Lösung bietet den Vorteil, daß für den einzelnen Induktor viel Raum zu seiner Gestaltung zur Verfügung steht und eine gegenseitige induktive Beeinflussung der Induktoren vermieden wird. Des weiteren ermöglicht die seitliche Zuführung der die Hubzapfen jeweils halbschalenförmig umgreifenden Induktoren eine maximale Umschlingung, ohne daß dabei eine Berührung der Induktoren bei einem Umlauf der Kurbelwelle erfolgt. Hinsichtlich ihrer konstruktiven Ausführung erfordert die gegenüberliegende Anordnung der Induktoren jedoch einen relativ großen Aufwand.

Die DE 40 01 887 offenbart eine verbesserte Lösung mit einem Verfahren und einer Vorrichtung zum Härten von Kurbelwellen mit durch Wangen voneinander getrennten Zapfen, wobei die Induktoren von der gleichen Seite aus an die Zapfen angelegt werden, die schmäler als die Härtezonenbreite sind, und wobei die Induktoren in bekannter Weise so ausgebildet sind, daß der auf Härtetemperatur zu erwärmende Oberflächenbereich gegenüber der Breite des Induktors erweitert ist sowie der Abstand der Induktoren so gewählt wird, daß die Erwärmungsbereiche benachbarter Induktoren ineinander übergehen.

Mit der Zuführung der Induktoren aus derselben Richtung, vorzugsweise von oben, erfordert diese Lösung einen deutlich geringeren maschinellen Aufwand zur Härtung. Um jedoch eine axiale Berührung der Induktoren in ihrem radialen Überschneidungsbereich zu vermeiden, muß der Umschlingungswinkel der Induktoren kürzer als bei einer entgegengesetzten Induktorenzuführung gewählt werden, was zu Nachteilen hinsichtlich der Effizienz des Härteverfahrens und der dabei zu erzielenden Einhärtetiefe, insbesondere einer einheitlichen Radienhärtung, führt.

Diese Einschränkung besteht auch bei einer aus der Praxis bekannten Ausgestaltung der Induktoren mit Abschnitten unterschiedlicher Breite, wobei ein vornehmlich der Radienhärtung dienender Induktorabschnitt über die Hälfte der Lagerbreite bedeckt und ein zweiter Induktorabschnitt zur Vermeidung einer Kollision mit dem gleich ausgestalteten anderen Induktor entsprechend schmäler ausgebildet ist. Da die Induktorabschnitte in diesem zurückgesetzten Bereich nicht auf den inneren Radius wirksam sind, verbleibt von der Mitte des Hublagerzapfens aus gesehen nur ein maximaler effektiver Umschlingungswinkel von etwa 50°, mit dem vorgegebene Einhärtetoleranzen häufig nur schwer einzuhalten sind.

Der vorliegenden Erfindung liegt die Aufgabe zugrunde, eine Vorrichtung der eingangs genannten Art zu schaffen, welche konstruktiv einfach und kostengünstig realisierbar ist und eine gesteigerte Effizienz bei Gewährleitung einer optimalen Laufflächen- und Radienhärtung ermöglicht.

Erfindungsgemäß wird diese Aufgabe durch die im Anspruch 1 genannten Merkmale gelöst.

Mit der erfindungsgemäßen Vorrichtung können sowohl die Vorteile einer langen Umschlingung der Hubzapfen hinsichtlich der Einhärtetiefe als auch die Vorteile der Zuführung der Induktoren aus einer Richtung hinsichtlich eines verminderten maschinellen Aufwandes erzielt werden.

Durch die erfindungsgemäße Anordnung der langen Induktorabschnitte auf Abstand zueinander in Umfangsrichtung kann der Umschlingungswinkel des Induktors im Überschneidungsbereich des Hubzapfenumfanges deutlich verlängert werden, wobei über den langen und verbreiterten Induktorabschnitt mit seinem entsprechend langen Heizweg bei gleicher Härtezeit mehr Energie insbesondere in die Übergangsradien eingebracht wird, wodurch dort eine große und einheitliche Einhärtetiefe ermöglicht wird.

Erfindungsgemäß angeordnete Induktoren sind mit einem mehr als doppelt so langen Abschnitt zur Radienhärtung als herkömmliche Induktoren mit Induktorzuführung aus einer Richtung realisierbar, weshalb z.B. bei einer derartigen Ausgestaltung ein Punkt am Umfang des Hubzapfens in einem bestimmten Zeitintervall bei n Umdrehungen der Kurbelwelle n-mal mit der doppelten Erwärmungslänge überstrichen wird.

Dadurch, daß die langen Induktorabschnitte derart angeordnet sind, daß sie einen der oberen Quadranten des Hubzapfenumfanges um wenigstens 60° und darüber hinaus noch den daran angrenzenden unteren Quadranten um wenigstens 30° umfassen, wobei sie jeweils den Hubzapfenumfang vorzugsweise in einem Winkelbereich von 120° umschlingen, wird der erfindungsgemäßen Vorrichtung eine hohe Effizienz verliehen.

Weitere vorteilhafte Ausgestaltungen und Vorteile der erfindungsgemäßen Vorrichtung ergeben sich aus den weiteren Unteransprüchen und dem nachfolgend anhand der Zeichnung prinzipmäßig beschriebenen Ausführungsbeispiel.

Es zeigt:
- Fig. 1: eine ausschnittsweise Draufsicht auf eine Kurbelwelle mit Induktoren einer Vorrichtung zur Laufflächen- und Radienhärtung;
- Fig. 2: einen Querschnitt durch die Kurbelwelle gemäß Fig. 1 entlang der Schnittlinie A-A der Fig. 1;
- Fig. 3: eine schematisierte Frontalansicht der Vorrichtung zur Laufflächen- und Radienhärtung nach den Fig. 1 und 2;
- Fig. 4: eine schematische Draufsicht auf die Vorrichtung zur Laufflächen- und Radienhärtung; und
- Fig. 5: eine perspektivische Ansicht eines Induktors der Vorrichtung nach den Fig. 1 bis 4.

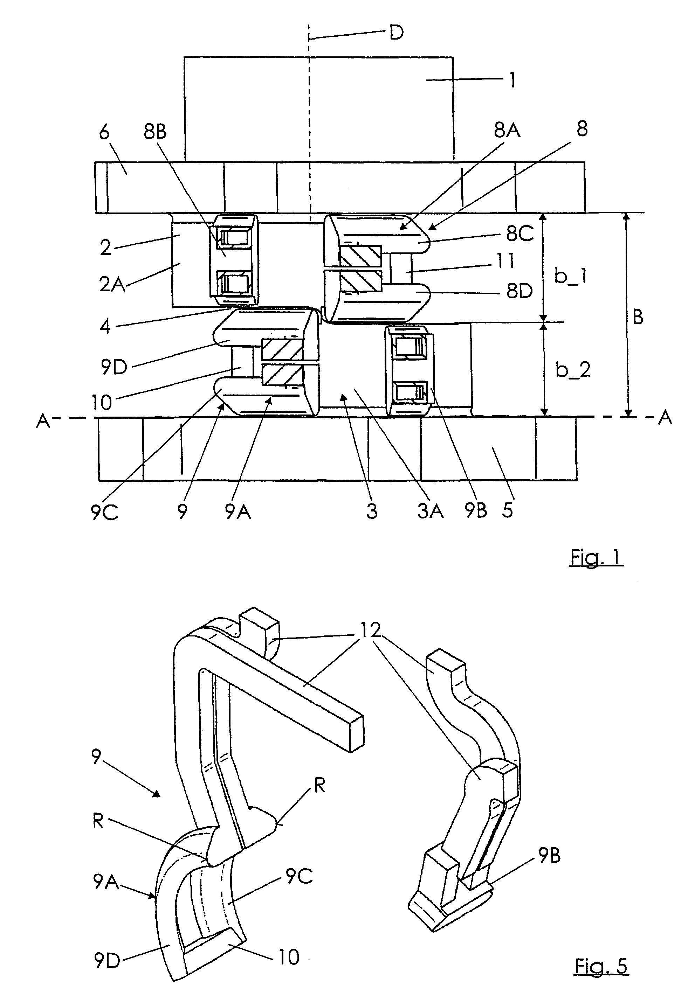

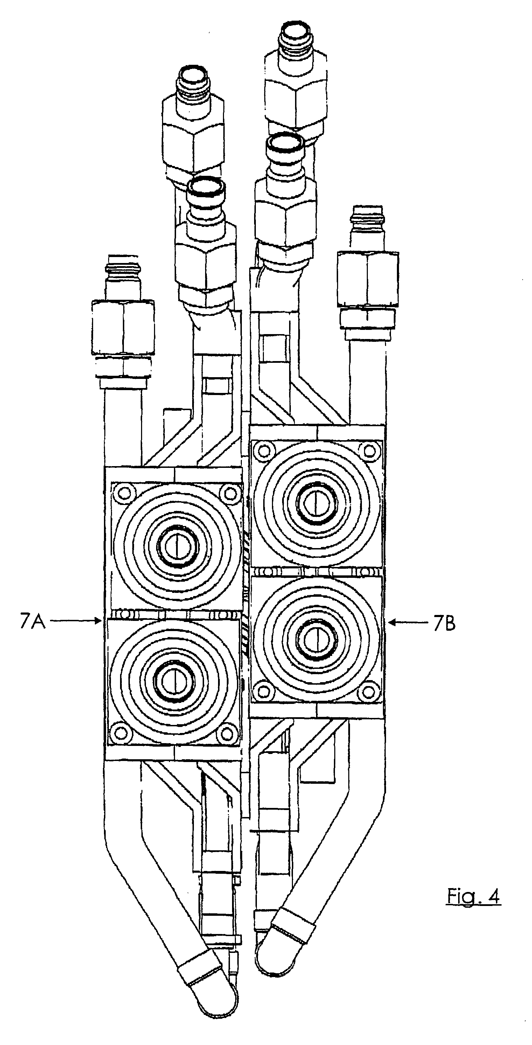

In den Figuren 1 bis 4 ist eine Kurbelwelle 1 mit unmittelbar nebeneinander und mit unterschiedlicher Winkellage in der Ebene senkrecht zu deren Drehachse D direkt hintereinander angeordneten Hubzapfen 2, 3 dargestellt, welche auch als "Split-Pin-Kurbelwelle" bezeichnet wird.

Die versetzt zueinander angeordneten Hubzapfen 2, 3 weisen jeweils Laufflächen 2A, 3A auf, welche auf einer Seite an einen Überdeckungsbereich 4 zwischen den Hubzapfen mit nicht näher dargestellten Übergangsradien grenzen und auf der gegenüberliegenden Seite durch eine Wange 5 bzw. 6 der Kurbelwelle 1 begrenzt sind.

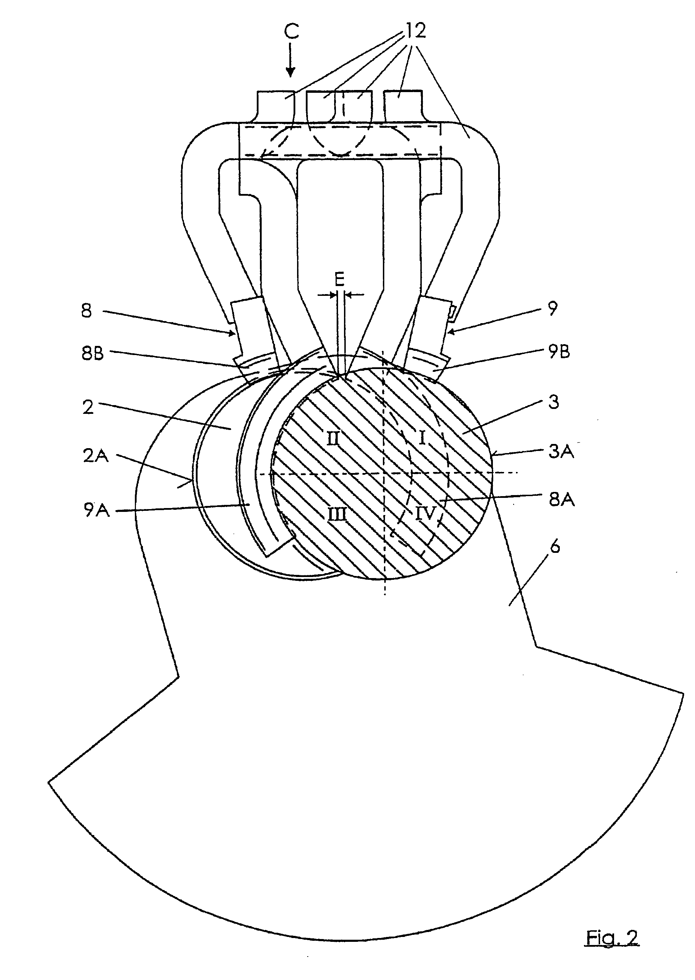

Zum gleichzeitigen elektroinduktiven Härten der Laufflächen 2A, 3A und der sie begrenzenden Radien sind in jeweils einem Induktorgehäuse 7A, 7B angeordnete Induktoren 8, 9 mit als Heizschleifen ausgebildeten Induktorabschnitten 8A, 8B, 9A, 9B vorgesehen, deren Krümmung der Krümmung der Laufflächen 2A, 3A entspricht und welche aus derselben durch einen Pfeil C in Fig. 2 ersichtlichen Richtung auf jeweils einen der Hubzapfen 2, 3 aufgesetzt werden.

Wie insbesondere in Fig. 1 und 5 ersichtlich ist, weisen die Induktoren 8, 9 bzw. die Induktorabschnitte 8A, 9A jeweils zwei parallel zueinander angeordnete Induktoräste 8C, 8D und 9C, 9D auf, von denen jeweils ein Induktorast 8D bzw. 9D in dem Überdeckungsbereich 4 zwischen der Hubzapfen 2, 3 und der andere Induktorast 8C bzw. 9C in einem der jeweils angrenzenden Wange 5, 6 zugewandten Randbereich des Hubzapfens angeordnet ist.

Die Heizschleifen in den Induktoren 8, 9 sind geteilt und als lange Induktorabschnitte 8A, 9A und kurze Induktorabschnitte 8B, 9B ausgeführt. Die langen Induktorabschnitte 8A, 9A sind dabei derart ausgebildet, daß sie eine Breite b_1 aufweisen, welche größer ist als die Hälfte der Gesamtbreite B der Laufflächen 2A, 3A.

Da sich die Induktoren 8, 9 einander in Achsrichtung der Kurbelwelle 1 überschneiden, sind die kurzen Induktorabschnitte 8B, 9B mit einer Breite b_2 derart schmal ausgebildet, daß sie bei einem Kurbelwellenumlauf auch an den langen Induktorabschnitten 8A, 9A mit der Breite b_2 berührungsfrei vorbeigleiten, so daß eine Kollision mit einem möglichen Kurzschluß ausgeschlossen werden kann.

Die langen Induktorabschnitte 8A, 9A, welche einen der oberen Quadranten I, II des Hubzapfenumfanges um mindestens 60°, im vorliegenden Ausführungsbeispiel um 65°, und den daran angrenzenden unteren Quadranten III bzw. IV um mindestens 30°, bei der Ausführung gemäß Fig. 1 bis 5 um 40°, umfassen, weisen in Umfangsrichtung der Kurbelwelle 1 stets einen Abstand E zueinander auf, welcher in einer anderen, nicht dargestellten Ausführung auch infinitesimal klein dimensioniert sein kann.

Diese Anordnung ermöglicht die Ausführung der langen Induktorabschnitte 8A, 9A mit einer Länge, mit der die Hubzapfen 2, 3 jeweils um einen Umfangswinkel von 105° umschlungen sind.

In den Fig. 1 und 5 ist ersichtlich, daß die Induktoräste 8C, 8D, 9C, 9D im Bereich der langen Induktorabschnitte 8A, 9A jeweils als Radienhärter mit einem seitlichen Außenradius R ausgebildet sind und an ihrem freien Ende durch eine als Flächenhärter ausgebildete Verbindung 10, 11 zur Stromführung miteinander verbunden sind.

Während die langen Induktorabschnitte 8A, 9A somit im wesentlichen der Radienhärtung dienen, sind die kurzen Induktorabschnitte 8B, 9B als Flächenhärter ausgebildet.

Die Dimensionierung bzw. Ausgestaltung der Induktoräste 8C, 8D, 9C, 9D insbesondere hinsichtlich ihrer Länge ergibt sich aus den jeweiligen Erwärmungsbedingungen und konstruktiven Gegebenheiten an der Kurbelwelle und kann in anderen Ausführungsbeispielen selbstverständlich anders gewählt werden.

Um Strom durch die Induktoren 8, 9 führen zu können und zur Durchführung von Kühlwasser sind die Induktoräste 8C, 8D, 9C, 9D mit Zuführungen 12, welche als Rohre ausgebildet sind, verbunden.

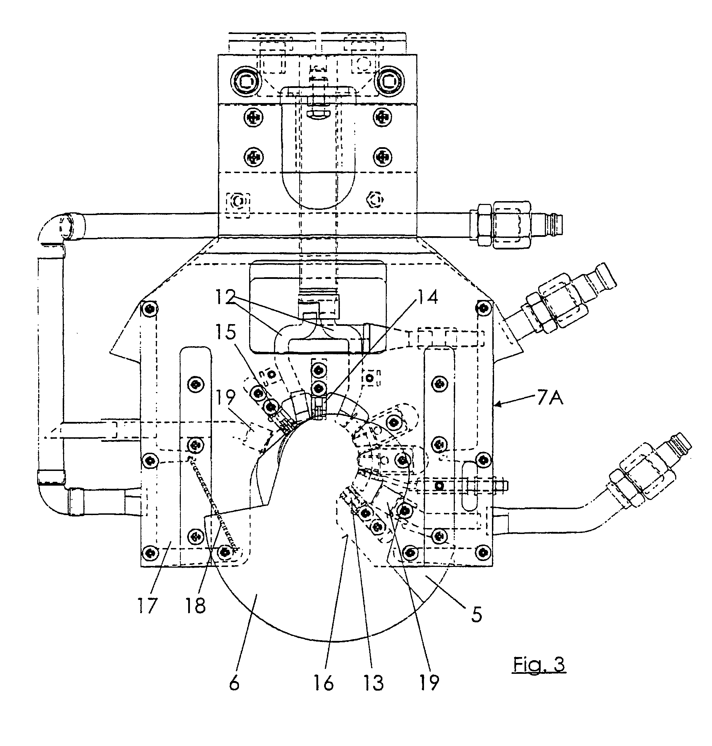

Bezug nehmend auf Fig. 3 ist ersichtlich, daß zur Abstützung und Führung der Induktoren 8, 9 auf den zu härtenden Hubzapfen 2, 3 jeweils drei Gleitschuhe 13, 14, 15 vorgesehen sind, wobei jeweils zwischen den Induktorabschnitten 8A, 8B und 9A, 9B sowie an den freien Enden der Induktorabschnitte 8A, 8B, 9A, 9B einer der Gleitschuhe 13, 14, 15 angeordnet ist. Der Gleitschuh 15 an dem freien Ende des kurzen Induktorabschnittes 8B, 9B ist dabei im Bereich der Halbierenden des ihm zugeordneten oberen Hubzapfenquadranten I bzw. II und der Gleitschuh 13 am freien Ende des langen Induktorabschnittes 8A, 9A um 180° versetzt angeordnet.

Bei Betrachtung des ebenfalls in Fig. 3 dargestellten Induktorgehäuses 7A ist ersichtlich, daß in seinem unteren Bereich eine Schräge 16 für ein einfaches Aufsetzen der Induktoren 8, 9 aus einer Richtung auf die zu härtenden Laufflächen 2A, 3A der Hubzapfen 2, 3 ausgeformt ist.

Zudem sind im unteren Bereich des Induktorgehäuses zum Aufspritzen eines Abschreckmediums auf die Laufflächen 2A, 3A und die daran angrenzenden Radien seitlich der Induktoren 8, 9 schematisch angedeutete Brausekästen 17 mit einem Lochblech 18 und Spaltbrausen 19 ersichtlich.

## Patentansprüche

1. Vorrichtung zum umlaufend gleichzeitig erfolgenden elektroinduktiven Härten von Laufflächen (2A,3A) und Übergangsradien an Kurbelwellen (1) mit unmittelbar nebeneinander und mit unterschiedlicher Winkellage in der Ebene senkrecht zu deren Drehachse (D) direkt hintereinander angeordneten Hubzapfen (2,3), wobei aus wenigstens annähernd derselben Richtung (C) auf die Hubzapfen (2,3) aufgesetzte Induktoren (8,9) vorgesehen sind, welche
- jeweils einem Hubzapfen (2,3) zugeordnet und einander in Achsrichtung der Kurbelwelle (1) überschneidend angeordnet sind sowie mindestens zwei parallel zueinander angeordnete Induktoräste (8C,8D,9C,9D) aufweisen, von denen jeweils ein Induktorast (8D,9D) in einem Überdeckungsbereich (4) der Hubzapfen (2,3) und der andere Induktorast (8C,9C) in einem einer Wange (5,6) zugewandten Randbereich des Hubzapfens (2,3) angeordnet ist,
- jeweils mit einem langen Induktorabschnitt (8A,9A) und einem kurzen Induktorabschnitt (8B,9B) derart ausgebildet sind, daß die langen Induktorabschnitte (8A,9A) teilweise eine Breite (b_1) aufweisen, welche größer ist als die Hälfte der Gesamtbreite (B) der Laufflächen (2A,3A), und
- wobei die langen Induktorabschnitte (8A,9A) derart angeordnet sind, daß sie einen der oberen Quadranten (I,II) des Hubzapfenumfanges um wenigstens 60° umfassen,
**dadurch gekennzeichnet, daß**
- die langen Induktorabschnitte (8A,9A) insgesamt eine Breite aufweisen, welche größer ist als die Hälfte der Gesamtbreite (B) der Laufflächen (2A,3A),
- die langen Induktorabschnitte (8A,9A) in Umfangsrichtung der Kurbelwelle (1) stets einen Abstand (E) zueinander aufweisen, und
- die langen Induktorabschnitte jeweils den an den oberen Quadranten (I,II) angrenzenden unteren Quadranten (III,IV) um wenigstens 30° umfassen.

2. Vorrichtung nach Anspruch 1,
**dadurch gekennzeichnet, daß**
die kurzen Induktorabschnitte (8B,9B) mit einer Breite (b_2) derart schmal ausgebildet sind, daß die langen Induktorabschnitte (8A,9A) an den kurzen Induktorabschnitten (8B,9B) des jeweils anderen Induktors bei Umlauf der Kurbelwelle (1) berührungsfrei vorbeigleiten.

3. Vorrichtung nach Anspruch 1,
**dadurch gekennzeichnet, daß**
die Induktoräste (8C,8D,9C,9D) im Bereich der langen Induktorabschnitte (8A,9A) als Radienhärter ausgebildet sind, welche an ihrem freien Ende durch eine als Flächenhärter ausgebildete Verbindung (10,11) miteinander verbunden sind.

4. Vorrichtung nach Anspruch 1,
**dadurch gekennzeichnet, daß**
die kurzen Induktorabschnitte (8B,9B) als Laufflächenhärter ausgebildet sind.

5. Vorrichtung nach Anspruch 1,
**dadurch gekennzeichnet, daß**
zwischen den Induktorabschnitten (8A,8B und 9A,9B) und an den freien Enden der Induktorabschnitte (8A,8B,9A,9B) jeweils ein Gleitschuh (13,14,15) angeordnet ist, wobei der Gleitschuh (15) an dem freien Ende des kurzen Induktorabschnittes (8B,9B) wenigstens annähernd im Bereich der Halbierenden des ihm zugeordneten oberen Hubzapfenquadranten (I,II) und der Gleitschuh (13) am freien Ende des langen Induktorabschnittes (8A,9A) um wenigstens annähernd 180° versetzt zu letzterem Gleitschuh angeordnet ist.

6. Vorrichtung nach Anspruch 1,
**dadurch gekennzeichnet, daß**
ein Induktorgehäuse (7A,7B) in seinem unteren Bereich eine Schräge (16) zum Aufsetzen auf die zu härtenden Laufflächen (2A,3A) der Hubzapfen (2,3) aufweist.

## Claims

1. Apparatus for effecting the simultaneous rotary electro-inductive hardening of running surfaces (2A, 3A) and transition radii of crankshafts (1) having crank pins (2, 3), which are disposed immediately adjacent and in direct succession to one another with a differing angular position in the plane at right angles to their axis of rotation (D), wherein inductors (8, 9) placed from at least approximately the same direction (C) onto the crank pins (2, 3) are provided, which
- are associated in each case with a crank pin (2, 3) and arranged in a mutually overlapping manner in axial direction of the crankshaft (1) and comprise at least two inductor branches (8C, 8D, 9C, 9D), which are disposed parallel to one another and of which in each case one inductor branch (8D, 9D) is disposed in an overlap region (4) of the crank pins (2, 3) and the other inductor branch (8C, 9C) is disposed in an edge region of the crank pin (2, 3) facing a sidepiece (5, 6),
- are constructed in each case with a long inductor portion (8A, 9A) and a short inductor portion (8B, 9B) in such a way that the long inductor portions (8A, 9A) partially have a width (b_1), which is greater than half of the total width (B) of the running surfaces (2A, 3A), and
- wherein the long inductor portions (8A, 9A) are disposed in such a way that they embrace at least 60° of one of the upper quadrants (I, II) of the crank pin circumference,
**characterized in that**
- the long inductor portions (8A, 9A) altogether have a width, which is greater than half of the total width (B) of the running surfaces (2A, 3A),
- the long inductor portions (8A, 9A) are constantly at a distance (E) from one another in peripheral direction of the crankshaft (1), and
- the long inductor portions embrace in each case at least 30° of the lower quadrant (III, IV) adjoining the upper quadrant (I, II).

2. Apparatus according to claim 1,
**characterized in that**
the short inductor portions (8B, 9B) are constructed with a width (b_2) narrow enough for the long inductor portions (8A, 9A) to slide past the short inductor portions (8B, 9B) of the respective other inductor without contact during rotation of the crankshaft (1).

3. Apparatus according to claim 1,
**characterized in that**
the inductor branches (8C, 8D, 9C, 9D) are designed in the region of the long inductor portions (8A, 9A) as radius hardeners, which are connected to one another at their free end by a connection (10, 11) designed as a surface hardener.

4. Apparatus according to claim 1,
**characterized in that**
the short inductor portions (8B, 9B) are designed as running surface hardeners.

5. Apparatus according to claim 1,
**characterized in that**
a sliding block (13, 14, 15) is disposed in each case between the inductor portions (8A, 8B and 9A, 9B) and on the free ends of the inductor portions (8A, 8B, 9A, 9B), wherein the sliding block (15) on the free end of the short inductor portion (8B, 9B) is disposed at least approximately in the region of the bisector of the upper crank pin quadrant (I, II) associated therewith and the sliding block (13) on the free end of the long inductor portion (8A, 9A) is disposed so as to be offset by at least approximately 180° relative to the latter sliding block.

6. Apparatus according to claim 1,
**characterized in that**
an inductor housing (7A, 7B) has in its bottom region a bevel (16) for placing onto the running surfaces (2A, 3A) of the crank pins (2, 3) to be hardened.

## Revendications

1. Dispositif pour la trempe électro-inductive exécutée simultanément en rotation de surfaces de portée (2A, 3A) et d'arrondis de raccordement sur des vilebrequins (1) comprenant des manetons (2, 3) disposés directement les uns à côté des autres et directement l'un à la suite de l'autre avec une position angulaire différente dans le plan, perpendiculairement à leur axe de rotation (D), dans lequel il est prévu des inducteurs (8, 9) appliqués sur les manetons (2, 3) au moins approximativement dans la même direction (C) et qui
- sont associés chacun à un maneton (2, 3) et disposés de façon à se chevaucher mutuellement dans la direction axiale du vilebrequin (1), et comportent au moins deux branches d'inducteur (8C, 8D, 9C, 9D) disposées parallèlement entre elles, dont une branche d'inducteur (8D, 9D) est disposée dans une région de chevauchement (4) des manetons (2, 3) et l'autre branche d'inducteur (8C, 9C) est disposée dans une région marginale du maneton (2, 3) dirigée vers un bras de manivelle (5, 6),
- sont formés chacun avec un segment d'inducteur long (8A, 9A) et un segment d'inducteur court (8B, 9B) de telle manière que les segments d'inducteurs longs (8A, 9A) comportent en partie une largeur (b_1) qui est plus grande que la moitié de la largeur totale (B) des surfaces de portée (2A, 3A), et
- dans lesquels les segments d'inducteurs longs (8A, 9A) sont disposés de manière qu'ils couvrent des quadrants supérieurs (I, II) de la circonférence des manetons sur au moins 60°,
**caractérisé en ce que**
- les segments d'inducteurs longs (8A, 9A) ont au total une largeur qui est plus grande que la moitié de la largeur totale (B) des surfaces de portée (2A, 3A),
- les segments d'inducteurs longs (8A, 9A) ont toujours une distance d'écartement (E) l'un par rapport à l'autre dans la direction périphérique du vilebrequin (1), et
- les segments d'inducteurs longs couvrent chacun le quadrant inférieur (III, IV) qui est adjacent aux quadrants supérieurs (I, II) sur au moins 30°.

2. Dispositif selon la revendication 1,
**caractérisé en ce que**
les segments d'inducteurs courts (8B, 9B), qui ont une largeur (b_2), sont suffisamment étroits pour que les segments d'inducteurs longs (8A, 9A) passent au droit des segments d'inducteurs courts (8B, 9B) de l'inducteur adjacent sans contact pendant la rotation du vilebrequin (1).

3. Dispositif selon la revendication 1,
**caractérisé en ce que**
les branches d'inducteurs (8C, 8D, 9C, 9D) constituent, dans la région des segments d'inducteurs longs (8A, 9A), des organes de trempe d'arrondis qui sont reliés entre eux, à leur extrémité libre, par une liaison (10, 11) qui constitue un organe de trempe de surface.

4. Dispositif selon la revendication 1,
**caractérisé en ce que**
les segments d'inducteurs courts (8B, 9B) constituent des organes de trempe de surfaces de portée.

5. Dispositif selon la revendication 1,
**caractérisé en ce que**
un patin (13, 14, 15) est disposé à chaque fois entre les segments d'inducteurs (8A, 8B et 9A, 9B) et aux extrémités libres des segments d'inducteurs (8A, 8B, 9A, 9B), le patin (15) étant disposé à l'extrémité libre du segment d'inducteur court (8B, 9B), au moins approximativement dans la région de la bissectrice du quadrant supérieur correspondant (I, II) du maneton, et le patin (13) étant disposé à l'extrémité libre du segment d'inducteur long (8A, 9A), avec un décalage d'au moins 180° environ par rapport au dernier patin.

6. Dispositif selon la revendication 1,
**caractérisé en ce que**
un carter d'inducteur (7A, 7B) comporte, dans sa région inférieure, un chanfrein (16) pour l'application sur les surfaces de portée (2A, 3A) du maneton (2, 3) qu'il s'agit de tremper.
